# EUROPÄISCHE PATENTSCHRIFT

(11) **EP 0 399 305 B1**
(45) Veröffentlichungstag und Bekanntmachung des Hinweises auf die Patenterteilung: **13.10.1993**
(21) Anmeldenummer: 90108856.7
(22) Anmeldetag: 11.05.1990
(51) Int. Cl.: A01K 5/02

(54) **Gerät zur Versorgung mehrerer Tiere mit Futter und Trinkwasser**
Device for the supply of several animals with food and water
Appareil pour l'approvisionnement de plusieurs animaux avec nourriture et eau

(30) Priorität: 20.05.1989 DE 3916499
(43) Veröffentlichungstag der Anmeldung: 28.11.1990
(73) Patentinhaber: IBO-Stalltechnik GmbH, D-46325 Borken (DE)
(72) Erfinder: IBO-Stalltechnik GmbH, D-46325 Borken (DE)
(74) Vertreter: Habbel, Hans-Georg, Dipl.-Ing.

(56) Entgegenhaltungen:
- WO-A-88/02215
- DE-A- 3 226 281
- DE-A- 3 730 723
- DE-C- 3 805 149
- DE-U- 8 807 758
- US-A- 4 694 780

## Beschreibung

Die Erfindung bezieht sich auf ein kompaktes Gerät, an dem auch bei Jungtieren die biologischen und physiologischen Steuerungsmechanismen, wie Hunger und Durst, für die individuelle und bedarfsgerechte Versorgung nicht nur in der Menge von Futter und Wasser, sondern auch in deren Verhältnis zueinander ohne gegenseitige Behinderung und Unruhe verlustfrei voll genutzt werden.

Sogenannte Breifutterautomaten, ähnlich der "Tierfuttereinrichtung" G 88 07 758.6, mit einem Freßplatz, der üblicherweise mit einem Wassereinlaßventil ausgerüstet ist, haben den Nachteil, daß mit jedem vom Tierrüssel ausgeübten Stoß gegen die Futterentnahmeeinrichtung bzw. gegen das Wassereinlaßventil Futter bzw. Wasser in den Trog fließen und somit Vergeudung und Mißverhältnis von Wasser zu Futter unvermeidbar sind.

Verschmutzte und damit gesundheitsgefährdende Freßplätze müssen zudem befürchtet werden.

In der DE-38 05 149 C1 wird eine "Einrichtung zum Beschicken von Futterstellen oder -trögen" beschrieben und dargestellt, die auf der einen Seite von nur zwei nebeneinanderliegenden Freßplätzen mit einem hoch angebrachten Beißnippel und auf der anderen Seite mit einem sogenannten Trogsprüher ausgerüstet ist.

Die so qualitativ unterschiedlichen benachbarten Freßplätze verursachen Raufereien und Kämpfe um den besten Platz.

Das Tier an dem Trogsprüher kann die Wasserentnahme aus der Zuleitung mit seinem momentanen Bedarf nie abschätzen. Zu hoher Wasserverbrauch ist die Regel.

In einer anderen Darstellung ist eine einseitige Ausführung für die Fütterung von Tieren in Einzelboxen gezeigt, bei der einheitliche Tränkezapfen außerhalb des Gerätes oben am Frontgitter angebracht sind, die zudem Wasservergeudung und Verschmutzung der Standfläche verursachen.

Bei der Futterentnahme müssen die Tiere ein pendelähnliches Betätigungselement zur Seite drücken.

Diese Bewegungsrichtung entspricht nicht dem natürlichen Wühltrieb der Schweine, der bevorzugt in Körperlängsachse nach vorne und aufwärts gerichtet ist, so daß hier bei unerfahrenen Tieren erhebliche Anlernprobleme auftreten können.

Die vorgenannte Literaturstelle zeigt u. a. auch gegenüberliegende Freßstellen mit wechselweiser Futterentnahmeeinrichtung, jedoch mit nur einer Tränke für zwei Nachbarplätze. Dadurch sind ebenfalls Rangeleien und unruhestiftende Wartezeiten vorprogrammiert. Zudem ist der Tränkezapfen so angeordnet, daß kein Tier von seinem Freßplatzstandort aus funktionsgerecht trinken kann. Die Tiere müssen immer zur Mitte drängen und behindern sich dabei gegenseitig.

Bei Gruppen von kleineren Tieren ist der Tränkezapfen oft von einem dritten Tier blockiert, so daß die fressenden Tiere gar nicht trinken können.

Die beidseitig vom Futtervorratsraum gelagerte Futterentnahmeeinrichtung ist zu aufwendig und mit dem kurzen Kraftarm und dem langen Lastarm derart ungünstig, daß schwächere oder jüngere Tiere die notwendige Betätigungskraft nicht aufbringen können. Da Jungtiere auch bei ständigem Angebot das Futter gut verwerten, ist die Möglichkeit des Wegschwenkens der Betätigungsstößel zur Freßzeitbegrenzung hier nicht nur überflüssig, sondern sogar nachteilig, weil verspielte Tiere die seitlich beweglichen Stößel zweckentfremdet zur Beschäftigung nutzen und so störende Klappergeräusche und unnötige Blockaden der Freßplätze verursachen.

Für die übliche manuelle Beschickung einer Fütterungseinrichtung für Jungtiere fehlt der erforderliche Futtervorratsraum bei dieser Anordnung gänzlich.

Aus der DE-37 30 723 A1 ist eine zweckmäßige "Anordnung zur Versorgung von Tieren mit Trinkwasser" bekannt, jedoch fehlten die entscheidenden Merkmale für eine wirtschaftliche und tiergerechte Futterversorgung und deren Konstellation zur Tränke, wodurch ein optimales Versorgungsgerät letztlich gekennzeichnet ist.

Obwohl das Anbieten von Futter und Wasser zur freien Aufnahme über ein Gerät in der Schweinemast grundsätzlich seit langem praktiziert wird, ist keine Einrichtung dieser Art für den Aufzuchtbereich bekannt, die den spezifischen Eigenarten und Bedürfnissen der Jungtiere gerecht wird.

Der Erfindung liegt deshalb die Aufgabe zugrunde, ein Versorgungsgerät der eingangs genannten Art zu schaffen, das nicht nur funktionell den Anforderungen für das Tier, sondern auch der Montage und der Praxis in bestehenden Aufstallungen sowie einer guten Kontrollmöglichkeit und Hygiene gerecht wird.

Um dieses hochgesteckte Ziel mit großem wirtschaftlichen Effekt zu erreichen, müssen den Tieren optimale Bedingungen geboten werden.

Dazu gehört, daß alle vier Freßplätze in der Ausfertigung gleich und mit einem eigenen Tränkezapfen ausgerüstet sind, die den Tieren beim Fressen spontan die direkte Wasserentnahme ohne Standortveränderung ermöglichen.

Damit aber einerseits der Futteraustritt eines Versorgungsplatzes trocken bleibt, die Auftrefffläche gut sauber gefressen werden kann und der Tränkezapfen frei von Futterresten bleibt und zum andern zwei nebeneinander stehende Tiere bei der Aufnahme des Futters von der Trogsohle sich weder gegenseitig stören noch von dritten behindert werden, sind die Futteraustrittsöffnungen nach außen an die Trogstirnflächen gelegt, die Tränkezapfen mitten zwischen zwei benachbarten Versorgungsplätzen so installiert, daß sie von unten schräg nach oben und vom Zentrum schräg dem Tier entgegengerichtet sind, wobei eine Barriere quer zum Tierstand in der Mitte der Trogvorderkante den Zugang eines dritten Tieres zum Wasser oder Futter ausschließt. Zudem soll der Doppelfreßstand in der Breite nur dem zweifachen Körperquermaß der zu versorgenden Tiere entsprechen.

Um Kosten und Platz zu sparen, soll das Versorgungsgerät kompromißlos auch an der gegenüberliegenden Seite von anderen Tieren der gleichen oder einer zweiten Gruppe chancengleich genutzt werden können.

Dazu ist es erforderlich, daß die Versorgungstechnik symmetrisch zu beiden Seiten aufgebaut ist und der Trog von beiden Seiten aus auch über die Mitte hinaus bis in die jeweils gegenüberliegende Hälfte hinein sauber geleckt werden kann. Die hierfür erforderliche Kopffreiheit zwischen Trogsohle und Betätigungselement der Futterentnahmeeinrichtung ist dann besonders wichtig, wenn zwei getrennte, in der Tierzahl stark differierende Gruppen an einem Gerät versorgt werden sollen oder eine Seite gar nicht belegt ist.

Die rohrförmig ausgebildeten Trogförderkanten sind sehr tierfreundlich, verhindern durch Hinterschneidung zum Troginneren hin, daß Futter aus den Trögen geschoben und vergeudet werden kann und trotzdem keine Schmutzecke bildet. Zudem übernimmt eine rohrförmige Trogkante noch die Aufgabe der Wasserführung von einem der beidseitig außerhalb liegenden Wasseranschlußmöglichkeiten zum rohrförmigen freßplatzunterteilenden Mittelsteg, der seinerseits die Tränkezapfen in der oben beschriebenen Stellung trägt.

Der Futterspeicher wird im wesentlichen aus zwei Bauteilen gebildet:

Dem vorzugsweise aus rostfreiem Stahlblech gefertigten Bodenteil mit der quergelagerten, einstellbaren Futterentnahmeeinrichtung und dem Futterbehälter, der seinerseits alternativ für die Befüllung von Hand aus einem Behälter mit großer Einfüllöffnung, der wegen der korrisionsfördernden Stalluft und zur optischen Kontrolle bevorzugt aus durchsichtigem Kunststoffmaterial gefertigt sein sollte oder bei automatischer Befüllung im wesentlichen durch das Futterleitrohr von der Fördereinrichtung zum Versorgungsgerät gebildet werden kann.

Für gründliche Reinigungen sind die Futterbehälter beider Ausführungsarten schnell vom Bodenteil zu lösen.

Im Bodenteil befindet sich an beiden äußeren Seiten in der Sohle je eine Futteraustrittsöffnung, die durch kurze, von außen zur Mitte gerichtete Futterrutschen derart abgedeckt sind, daß Futter aus Speicherraum mittels der Entnahmeeinrichtung geschoben werden kann, andererseits aber verhindert wird, daß Futter unkontrolliert ausfließen kann.

Wegen der Chancengleichheit aller sich versorgenden Tiere muß sichergestellt sein, daß die Futterentnahmeeinrichtung bei wechselseitiger Betätigung in beiden Richtungen annähernd gleiche Portionen freigibt. Dazu gehört auch die Vermeidung von Brückenbildung im Speicherraum, zudem muß sie auf unterschiedliche Futterstoffe, wie z. B. Mehl, Brösel oder Pellets, einstellbar sein.

Die symmetrischen Verhältnisse des Speichers und der Futterentnahmeeinrichtung sorgen für gleiche Futterausschubmengen zu beiden Seiten. Durch die Längenverstellung der Verbindung von der Drehachse zum Betätigungselement wird die futterspezifische Menge von Max. bis 0 reguliert, wobei die Stoßdämpfer an den beiden Enden des zweiseitigen Hebels als Betätigungselement zusammen mit der unteren Außenseite des Bodenteiles vom Futterspeicher den Hub begrenzen, und bei jedem Entnahmehub, der von den Tieren ausgeführt wird, werden mit diesem Anschlag auf den Futterspeicher Schwingungen übertragen und so Brückenbildungen vermieden.

Das erfindungsgemäße Versorgungsgerät wird überwiegend überaltete oder unwirtschaftliche Futter- und Tränkeeinrichtungen in vorhandenen Aufstallungen ersetzen. Deshalb wird an beiden Trogstirnwänden einseitig die Montagefläche für die Verschraubung an vorhandenen Boxentrennwänden angekantet. Im Gitter muß dann nur noch eine Öffnung entsprechend der Doppelfreßplatzbreite und der Höhe bis zur Oberkante des Bodenteiles ausgeschnitten werden.

Eine solide Bodenbefestigung ist über die unteren nach außen weisenden Abkantungen der Trogstirnwände möglich.

Für den einfachen Anschluß an vorhandene Wasserleitungen steht wahlweise das linke oder rechte Gewinde tragende Rohrende der einen wasserführenden Trogvorderkante zur Verfügung.

Die Erfindung wird im folgenden anhand der Zeichnungen näher erläutert.
- Fig. 1: macht den Aufbau und die Funktionsweise des Versorgungsgerätes im Längsschnitt deutlich,
- Fig. 2: zeigt das Versorgungsgerät in der Seitenansicht mit gegenüberstehenden Tieren, die durch ein Buchtengitter voneinander getrennt sind,
- Fig. 3: stellt in der Draufsicht des Versorgungsgerätes die vier Plätze mit Tieren in getrennten Buchten dar.

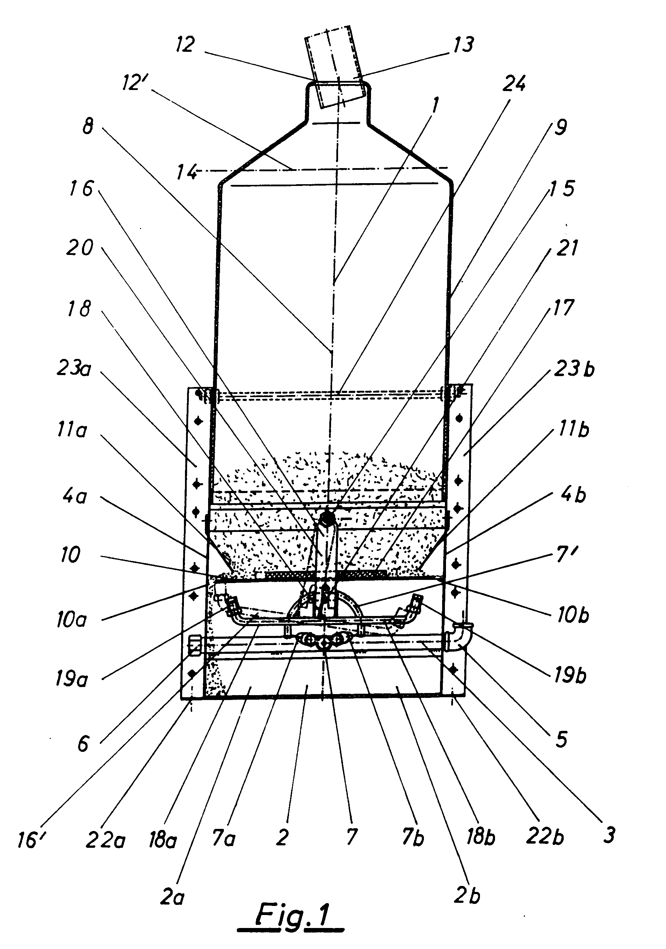

In Fig. 1 wird der Aufbau des Versorgungsgerätes 1 deutlich. Auf dem Boden steht der gemeinsame Trog 2 mit zwei nebeneinanderliegenden Freßplätzen 2a und 2b und der wasserführenden Trogvorderkante 3, dessen Gewindeenden durch die spiegelbildlich geformten Trogstirnwände 4a und 4b hindurch nach außen des Versorgungsgerätes 1 führen, wo auf der linken Seite ein Verschlußstopfen 6 und rechts ein Rohrwinkel 5 für den Anschluß der Wasserleitung montiert ist.

Am freßplatzteilenden und ebenfalls wasserführenden, im Schnitt gezeichneten Mittelsteg 7 sind die den Freßplätzen 2a und 2b zugeordneten Tränkezapfen 7a und 7b erkennbar. Die Querbarriere 7' soll den Zugang eines störenden dritten Tieres verhindern.

Der Futterspeicher 8 wird oben durch den Futterbehälter 9 und unten durch das Bodenteil 10 mit den äußeren Futteraustrittsöffnungen 10a und 10b, die durch die von außen eingesteckten Rutschen 11a bzw. 11b abgedeckt werden, gebildet.

Die Bohrung 12 entsprechend dem Außendurchmesser des Futterzuführrohres 13 an der höchsten Stelle des Futterbehälters 9 ist auch bei schräger Einführung des Futterzuführrohres 13 staubdicht.

Bei Beschickung des Futterspeichers 8 von Hand wird der Futterbehälter 9 an der Markierungslinie 14 abgeschnitten, wodurch sich eine große Einfüllöffnung 12' ergibt.

Unmittelbar unter dem Futterbehälter 9 auf der senkrechten Symmetrielinie des Versorgungsgerätes 1 im oberen Bereich des Bodenteiles 10 befindet sich der Drehpunkt 15 der Futterentnahmeeinrichtung 16 mit dem Futterschieber 17 und dem Betätigungselement 18, dessen beide Hebelenden 18a und 18b die hubbestimmenden Stoßdämpfer 19a bzw. 19b tragen.

Die gestrichelte Stellung 16' der Futterentnahmeeinrichtung 16 wird praktisch nur durch den aufwärts gerichteten Rüsseldruck unter das Hebelende 18a, der von einem der beiden Tiere der gegenüberliegenden Freßplätze an der a-Seite ausgeübt wird, erreicht und macht die Funktion verständlich.

Vom Drehpunkt 15 führt die Verbindung 20 durch eine Bohrung im Zentrum des losen Futterschiebers 17 und einem Langloch im Zentrum des unteren Bodenteiles 10, das wiederum vom Futterschieber 17 abgedeckt wird, zum Betätigungselement 18.

Bei Bewegung der Futterentnahmeeinrichtung 16 durch ein Tier in die Position 16' wird der Futterschieber 17 durch die Verbindung 20 zur Futteraustrittsöffnung 10a hin gedrückt und schiebt so eine bestimmte Futtermenge aus dem Futterspeicher 8.

Das aktive Tier auf der a-Seite bekommt direkt das Futter vorgelegt und kann erst dann wieder eine neue Portion entnehmen, nachdem ein Tier von der b-Seite die Futterentnahmeeinrichtung 16 für seine Versorgung genutzt hat.

Die Verbindung 20 ist durch die Stellschraube 21 in der Länge stufenlos derart veränderbar, daß sich bei gleichzeitiger Anlage der beiden Stoßdämpfer 19a und 19b an die Unterseite des Bodenteiles 10 die kürzeste Verbindung 20 ergibt, bei der sich kein Futter mehr aus dem Futterspeicher 8 entnehmen läßt (Nullstellung).

Über diese Stellschraube 21 erfolgt auch die Anpassung an unterschiedliche Futterstoffe und Tierrassen.

Die beiden Enden des Betätigungselementes 18 sind auf die Unterseite des Bodenteiles 10 gerichtet, um bei Benutzung durch die Tiere impulsartige Schwingungen auf den Futterspeicher 8 zu bringen und so Brückenbildungen des Futters zu vermeiden, dabei mindern die Stoßdämpfer 19a und 19b Klopfgeräusche und schonen Tierrüssel und Material.

An den spiegelbildlich geformten Trogstirnwänden 4a und 4b sind die Abkantungen 22a und 22b für die Befestigung des Versorgungsgerätes 1 am Boden und die Montageflächen 23a und 23b für die Verschraubung am Buchtengitter erkennbar.

Die zwei Verbindungsstreben 24 im oberen Bereich der beiden Trogstirnwände 4a und 4b sind an den Außenseiten des Futterbehälters 9 entlang geführt und erfüllen Stabilisierungsaufgaben.

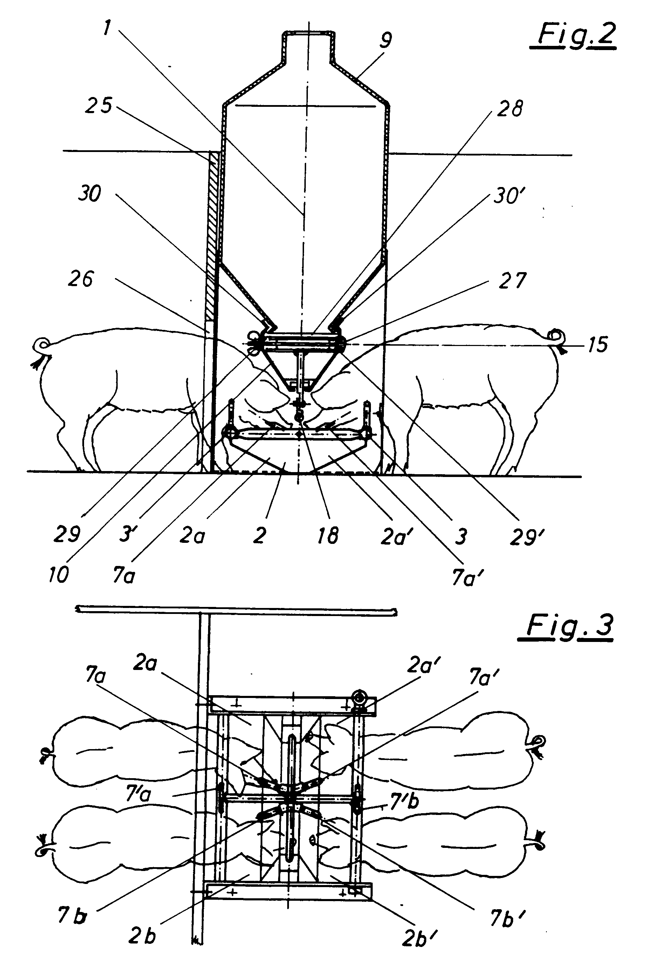

In Fig. 2 ist das Versorgungsgerät 1 an die Buchtentrennwand 25 montiert, die im Tierbereich einen Ausschnitt 26 aufweist. Das Betätigungselement 18 kann von beiden gegenüberstehenden Tieren der Freßplätze 2a und 2a' genutzt werden.

Die Tränkezapfen 7a und 7a' sind aufwärts den Tieren entgegengerichtet.

Die im Drehpunkt 15 plazierte Schraube 27 geht durch die Hohlachse 28 mit den beiden seitenstabilisierenden Gleitlagern 29 und 29' und den beiden gegenüberliegenden profilierten Kanten 30 und 30' des Bodenteiles 10 und hält so den Futterbehälter 9 mit entsprechender Gegenprofilierung, der für Reinigungszwecke schnell durch Lösen der Schraube 27 und Auseinanderdrücken der Kanten 30 und 30' abgenommen werden kann.

Der Querschnitt des Troges 2 ist derart ausgebildet, daß das Futter immer zur tiefsten Mittelrinne rutscht und die Tiere von beiden Seiten den Gesamtbereich mit der Zunge gut erreichen können.

Im Bereich der rohrförmigen Trogkanten 3 und 3' sind die Hinterschneidungen zum Troginneren erkennbar, die das Hinausschieben des Futters durch die Tiere verhindern.

In der Fig. 3 sind die Versorgungsplätze 2a, 2a', 2b und 2b' in der Ausstattung mit zugeordneten Tränkezapfen 7a, 7a', 7b und 7b' in ihrer schrägen zum Tier gerichteten Stellung und der abschirmenden Querbarriere 7'a und 7'b gut erkennbar.

Die Plazierung der Tränkezapfen kann auch an die Trogstirnseiten und ohne Berücksichtigung der Trogvorderkante als Wasserzuleitung erfolgen.

Ebenfalls ist die Verlegung der Futteraustrittsöffnungen mehr zur Gerätemitte hin denkbar.

## Patentansprüche

1. Gerät zur Versorgung mehrerer Tiere mit Futter und Trinkwasser, die in einer Herde oder durch eine Abtrennung in zwei Gruppen gehalten werden mit je zwei gegenüberliegenden Freßplätzen und einer von allen vier Plätzen aus durch die Tiere selbst betätigbaren, jedoch von jeweils zwei nebeneinander oder diagonal gegenüberliegenden Plätzen aus wechselweise wirkenden Futterentnahmeeinrichtungen, wobei jedem Freßplatz (2a, 2a', 2b, 2b') eine eigene Selbsttränke (7a, 7a', 7b, 7b') zugeordnet ist, daß die vier Freßplätze (2a, 2a', 2b, 2b') aus einem rinnenförmigen Trog (2) gebildet werden, dessen tiefste Stelle mittig und quer zu den Tierstandorten verläuft und daß sich die Futteraustrittsöffnungen (10a, 10b) außen in unmittelbarer Nähe der beiden seitlichen Trogstirnwände (4a und 4b) befinden, wobei die mit einem Futterschieber (17) ausgerüstete Futterentnahmeeinrichtung (16) in einem Drehpunkt (15) gelagert ist und einen als zweiseitigen Hebel ausgebildetes Betätigungselement (18) aufweist, dessen Längsachse quer zu den Tierstandorten verläuft.

2. Versorgungsgerät nach Anspruch 1, dadurch gekennzeichnet, daß die Kraft für die wechselseitige Futterentnahme im Zentrum des lose auf den Behälterboden (10) liegenden Futterschiebers (17) angreift.

3. Versorgungsgerät nach Anspruch 1 oder 2, dadurch gekennzeichnet, daß die beiden tierzugewandten Trogkanten (3 und 3') rohrförmig abgerundet sind und zum Troginneren eine Hinterschneidung bilden.

4. Versorgungsgerät nach Anspruch 1 bis 3, dadurch gekennzeichnet, daß wenigstens an einer Seite die tierzugewandte obere Trogkante (3) Bestandteil der Trinkwasserleitung ist.

5. Versorgungsgerät nach Anspruch 1 bis 4, dadurch gekennzeichnet, daß die freßplatzteilende Verbindung (7) von der Mitte einer Trogvorderkante (3) zur anderen (3') wasserführend ist und die Selbsttränken (7a, 7a', 7b, 7b') trägt.

6. Versorgungsgerät nach Anspruch 1 bis 5, dadurch gekennzeichnet, daß die Trogvorderkanten (3, 3') in der Mitte zwischen zwei benachbarten Tierstandorten eine Querbarriere (7'a und 7'b) aufweisen.

7. Versorgungsgerät nach Anspruch 1 bis 6, dadurch gekennzeichnet, daß der Abstand vom Drehpunkt (15) der Entnahmeeinrictung bis zum Betätigungselement (18) veränderlich ist.

8. Versorgungsgerät nach Anspruch 1 bis 7, dadurch gekennzeichnet, daß das Betätigungselement (18) an seinen beiden Hebelenden (18a und 18b) hubbestimmende Stoßdämpfer (19a und 19b) trägt.

9. Versorgungsgerät nach Anspruch 1 bis 8, dadurch gekennzeichnet, daß die Außenfläche des Behälterbodens (10) als Anschlag für die beiden Hebelenden (18a und 18b) des Betätigngselementes (18) dient.

10. Versorgungsgerät nach Anspruch 1 bis 9, dadurch gekennzeichnet, daß die quer zum Betätigungselement (18) liegende Drehachse (28) der Entnahmeeinrichtung an beiden Enden ein Gleitlager (29 und 29') aufweist.

11. Versorgungsgerät nach Anspruch 1 bis 10, dadurch gekennzeichnet, daß der Futterbehälter (9) vom Bodenteil (10) getrennt werden kann.

12. Versorgungsgerät nach Anspruch 1 bis 11, dadurch gekennzeichnet, daß der Futterbehälter (9) an der höchsten Stelle seiner Abdeckung eine Bohrung (12) aufweist, die dem Außendurchmesser des Futterzuführrohres (13) entspricht.

13. Versorgungsgerät nach Anspruch 1 bis 12, dadurch gekennzeichnet, daß der Futterbehälter (9) im wesentlichen aus einem Kunststoffbehälter gebildet wird.

14. Versorgungsgerät nach Anspruch 1 bis 13, dadurch gekennzeichnet, daß der Futterbehälter (9) aus einem durchsichtigen Material hergestellt ist.

15. Versorgungsgerät nach Anspruch 1 bis 14, dadurch gekennzeichnet, daß der Futtervorratsbehälter im wesentlichen aus dem Futterzuführrohr (13) zwischen Transport- und Futterentnahmeeinrichtung (16) gebildet wird.

16. Versorgungsgerät nach Anspruch 1 bis 15, dadurch gekennzeichnet, daß beide Trogstirnwände (4a und 4b) einseitig äußere senkrechte Montageflächen (23a und 23b) aufweisen.

17. Versorgungsgerät nach Anspruch 1 bis 16, dadurch gekennzeichnet, daß die beiden Trogstirnwände (4a und 4b) unten nach außen hin Abkantungen (22a und 22b) für die Bodenbefestigung aufweisen.

## Claims

1. An apparatus for supplying several animals with feed and drinking water, said animals being in a herd or kept in two groups by a separator, which apparatus comprises two feeding places opposite each other and a feed removal device actuatable from all four places by the animals themselves, but working alternately from two places next to or diagonally opposite each other, wherein a separate automatic drinking vessel (7a, 7a', 7b, 7b') is associated with each feeding place (2a, 2a', 2b, 2b'), wherein the four feeding places (2a, 2a', 2b, 2b') consist of a channel-shaped trough (2), the deepest point of which runs centrally and perpendicularly to the animal positions and wherein the feed outlet openings (10a, 10b) are located outside in the immediate vicinity of the two lateral trough ends (4a and 4b), the feed removal device (16) equipped with a feed slide (17) being mounted in a pivot and comprising an actuating member (18) constructed as a double lever, the longitudinal axis of said actuating member (18) running perpendicularly with respect to the animal positions.

2. A supply apparatus according to claim 1, characterized in that the force for the two-way feed removal acts on the centre of the feed slide (17) lying loosely on the container floor (10).

3. A supply apparatus according to claim 1 or claim 2, characterized in that the two trough edges (3 and 3') facing the animals are rounded in the form of pipes and form an undercut towards the inside of the trough.

4. A supply apparatus according to claims 1 to 3, characterized in that the upper trough edge (3) facing the animals is a component of the drinking water pipe at least on one side.

5. A supply apparatus according to claims 1 to 4, characterized in that the connection (7) dividing the feeding place conveys water from the middle of one trough front edge (3) to the other (3') and carries the automatic drinking vessels (7a, 7a', 7b, 7b').

6. A supply apparatus according to claims 1 to 5, characterized in that the front edges (3, 3') of the troughs comprise a transverse barrier (7'a and 7'b) in the middle between two adjacent animal positions.

7. A supply apparatus according to claims 1 to 6, characterized in that the distance from the pivot (15) of the removal device to the actuating member (18) is capable of alteration.

8. A supply apparatus according to claims 1 to 7, characterized in that the actuating member (18) carries lift-defining shock absorbers (19a and 19b) at its two lever ends (18a and 18b).

9. A supply apparatus according to claims 1 to 8, characterized in that the outer surface of the container floor (10) serves as a limit stop for the two lever ends (18a and 18b) of the actuating member (18).

10. A supply apparatus according to claims 1 to 9, characterized in that the axis of rotation (28) of the removal device, which axis lies perpendicularly with respect to the actuating member (18), comprises a sliding bearing (29 and 29') at each of the two ends.

11. A supply apparatus according to claims 1 to 10, characterized in that the feed container (9) may be separated from the floor part (10).

12. A supply apparatus according to claims 1 to 11, characterized in that the feed container (9) comprises a bore (12) at the highest point of its cover, which bore (12) corresponds to the external diameter of the feed supply pipe (13).

13. A supply apparatus according to claims 1 to 12, characterized in that the feed container (9) consists substantially of a plastics container.

14. A supply apparatus according to claims 1 to 13, characterized in that the feed container (9) is made of a transparent material.

15. A supply apparatus according to claims 1 to 14, characterized in that the feed supply container consists substantially of the feed supply pipe (13) between transportation and feed removal device (16).

16. A supply apparatus according to claims 1 to 15, characterized in that both trough ends (4a and 4b) have outer vertical assembly surfaces (23a and 23b) on one side.

17. A supply apparatus according to claims 1 to 16, characterized in that, underneath, the two trough ends (4a and 4b) comprise bevelling (22a and 22b) towards the outside for fastening to the floor.

## Revendications

1. Appareil pour l'approvisionnement en nourriture et en eau de plusieurs animaux, qui sont maintenus en troupeau ou, par une séparation, en deux groupes avec chacun deux places de mangeoire opposées et un dispositif de retrait de nourriture pouvant être actionné depuis les quatre places par les animaux eux-mêmes, mais agissant alternativement depuis deux places disposées côte à côte ou face à face en diagonale à la fois, caractérisé en ce qu'un abreuvoir (7a, 7a', 7b, 7b') est attribué à chaque place de mangeoire (2a, 2a', 2b, 2b'), en ce que les quatres places de mangeoire (2a, 2a', 2b, 2b') sont formées par une auge (2) en forme de gouttière, dont le point le plus profond passe au centre et perpendiculairement aux emplacements des animaux et en ce que les ouvertures de sortie de la nourriture (10a, 10b) se trouvent à l'extérieur à proximité immédiate des deux parois d'auge (4a et 4b) latérales, le dispositif de retrait de nourriture (16) pourvu d'une vanne à nourriture (17) étant supporté en un point de rotation (15) et présentant un élément d'actionnement (18) conçu comme un levier bilatéral, dont l'axe longitudinal est perpendiculaire aux emplacements des animaux.

2. Appareil d'approvisionnement selon la revendication 1, caractérisé en ce que la force nécessaire pour le retrait alternatif de nourriture s'exerce au centre de la vanne à nourriture (17) disposée sans serrage sur le fond du réservoir (10).

3. Appareil d'approvisionnement selon la revendication 1 ou 2, caractérisé en ce que les deux bords d'auge (3 et 3') orientés vers les animaux sont arrondis en forme de tube et forment un retrait vers l'intérieur de l'auge.

4. Appareil d'approvisionnement selon l'une ou l'ensemble des revendications 1 à 3, caractérisé en ce que le bord d'auge supérieur (3) orienté vers les animaux fait partie de la conduite d'eau de boisson sur au moins un côté.

5. Appareil d'approvisionnement selon l'une ou l'ensemble des revendications 1 à 4, caractérisé en ce que la liaison (7) séparant les places de mangeoire conduit l'eau du milieu d'un bord antérieur d'auge (3) à l'autre (3') et porte les abreuvoirs (7a, 7a', 7b, 7b').

6. Appareil d'approvisionnement selon l'une ou l'ensemble des revendications 1 à 5, caractérisé en ce que les bords antérieurs d'auge (3, 3') présentent au milieu entre des emplacements d'animaux voisins une barrière transversale (7'a et 7'b).

7. Appareil d'approvisionnement selon l'une ou l'ensemble des revendications 1 à 6, caractérisé en ce que la distance entre le point de rotation (15) du dispositif de retrait et l'élément d'actionnement (18) peut être modifiée.

8. Appareil d'approvisionnement selon l'une ou l'ensemble des revendications 1 à 7, caractérisé en ce que l'élément d'actionnement (18) porte à ses deux extrémités de levier (18a et 18b) des amortisseurs (19a et 19b) déterminant la levée.

9. Appareil d'approvisionnement selon l'une ou l'ensemble des revendications 1 à 8, caractérisé en ce que la surface extérieure du fond de réservoir (10) sert de butée pour les deux extrémités de levier (18a et 18b) de l'élément d'actionnement (18).

10. Appareil d'approvisionnement selon l'une ou l'ensemble des revendications 1 à 9, caractérisé en ce que l'axe de rotation (28) du dispositif de retrait situé perpendiculairement à l'élément d'actionnement (18) présente aux deux extrémités un palier à glissement (29 et 29').

11. Appareil d'approvisionnement selon l'une ou l'ensemble des revendications 1 à 10, caractérisé en ce que le réservoir de nourriture (9) peut être séparé de la partie de fond (10).

12. Appareil d'approvisionnement selon l'une ou l'ensemble des revendications 1 à 11, caractérisé en ce que le réservoir de nourriture (9) présente au point le plus haut de sa couverture un trou (12), qui correspond au diamètre extérieur du tube d'arrivée de la nourriture (13).

13. Appareil d'approvisionnement selon l'une ou l'ensemble des revendications 1 à 12, caractérisé en ce que le réservoir de nourriture (9) est sensiblement formé d'un réservoir en plastique.

14. Appareil d'approvisionnement selon l'une ou l'ensemble des revendications 1 à 13, caractérisé en ce que le réservoir de nourriture (9) est fabriqué dans un matériau transparent.

15. Appareil d'approvisionnement selon l'une ou l'ensemble des revendications 1 à 14, caractérisé en ce que le réservoir de stockage de la nourriture est formé pour l'essentiel par le tube d'arrivée de la nourriture (13) entre le dispositif de transport et le dispositif de retrait de nourriture (16).

16. Appareil d'approvisionnement selon l'une ou l'ensemble des revendications 1 à 15, caractérisé en ce que les deux faces d'auge (4a et 4b) présentent des surfaces de montage (23a et 23b) verticales extérieures d'un côté.

17. Appareil d'approvisionnement selon l'une ou l'ensemble des revendications 1 à 16, caractérisé en ce que les deux faces d'auge (4a et 4b) présentent en bas et vers l'extérieur des chanfreins (22a et 22b) pour la fixation au sol.
